# EUROPEAN PATENT APPLICATION

(11) **EP 3 112 111 A1**
(43) Date of publication of application: **04.01.2017**
(21) Application number: 15175028.8
(22) Date of filing: 02.07.2015
(51) Int. Cl.: B29B 15/12, B32B 5/26

(54) **A FIBER TAPE FOR PRODUCING FIBER REINFORCED PARTS AND PROCESS FOR MANUFACTURING SUCH A FIBER TAPE**

(71) Applicant: HONDA MOTOR CO., LTD., Tokyo, 107-8556 (JP)
(72) Inventor: Poeppel, Artur, 63073 Offenbach (DE); Leonhardt, Sven, 63073 Offenbach (DE); Mack, Jens, 93107 Thalmassing (DE)
(74) Representative: Herzog, Markus

(57) **Abstract**

The invention relates to a fiber tape (10) for producing fiber reinforced parts, the fiber tape (10) comprising a fiber layer (12) and a binder material securing the fibers (14) of the fiber layer (12) to each other. According to the invention, the binder material is provided as a binder mesh (16) covering at least an upper surface (12a) and/or a lower surface (12b) of the fiber layer (12).

## Description

The invention relates to a fiber tape for producing fiber reinforced parts, comprising a layer of fibers and a binder material securing the fibers to each other.

FR 3 005 065 A1 discloses a method for providing a layer of fibers which may be used in the fiber tape according to the invention. Usually, a binder powder is added to the layer of fibers in order to secure the fibers to each other. The particles of the binder powder penetrate into the volume of the layer of fibers and punctually connect the fibers to each other. In practice, it has been found that the surface of the so-obtained fiber tapes has an irregular appearance, as free fiber ends may project from the fiber tape surface. As a consequence, additional measures have to be taken in order to ensure that prepregs or fiber reinforced parts produced using the fiber tape will have a smooth surface.

Therefore, it is the object of the invention to provide a fiber tape having improved surface properties.

According to the invention this object is solved by a fiber tape for producing fiber reinforced parts, the fiber tape comprising a fiber layer and a binder material securing the fibers of the fiber layer to each other, wherein the binder material is provided as a binder mesh covering at least an upper surface and/or a lower surface of the fiber layer.

According to the invention, the most important property of the binder mesh is that the binder material forms a continuous structure such that each section of binder material is supported by other sections of binder material surrounding it. It should be noted that, in the context of the present invention, each continuous structure providing such an inherent support is considered to be a "binder mesh". In particular, the binder mesh may have a regular structure, e.g. similar to that of a fishing net, a fabric or the like, as well as an irregular structure, e.g. similar to a veil, an omentum or the like.

Due to the support provided by the continuous structure of the binder mesh, the fibers, and in particular their free ends, are held more effectively inside the plane of the fiber layer, resulting in a smoother surface of the fiber tape.

In order to provide a lateral confinement for the fiber layer, the binder mesh may be provided as a binder mesh strip laterally folded around the side edges of the fiber layer. According to this embodiment, the fiber tape may easily be produced with a pre-defined width.

When the two side edges of the binder mesh strip are overlapping each other, the fiber layer may be completely wrapped by the binder mesh, thus enclosing the fibers of the fiber layer securely inside the envelope formed by the binder mesh.

According to a further embodiment, the binder mesh may be made of a hot-melt or hot-softening glue material. In particular, the hot-melt glue material may be selected from the group of materials including polyamide, copolyamide, polyester, polyvinyl alcohol, and duromers having thermoplastic properties. Polyvinyl alcohol, for example, has the property to be solvable in thermoset matrix materials. As such it may be preferred in applications where it is advantageous that the binder material doesn't form a separate structure in the fiber reinforced part. For other applications, however, it may be preferable to have such a separate structure in the fiber reinforced part, e.g. for preventing or at least restraining crack propagation through the fiber reinforced part. A typical melting temperature of the afore-mentioned hot-melt glue materials is between about 80°C and about 220°C. As a hot-softening glue material, for example, an amorphous plastic material, e.g. an epoxy based material, may be used.

During the further process of manufacturing fiber reinforced parts, the fiber tape according to the invention may be cut into pieces which then may be arranged in layers for forming fiber preforms which do not yet include a matrix material. In order to facilitate the handling of such fiber preforms before they are impregnated with the matrix material, it is suggested that the binder mesh material is not or at least not fully activated. According to this embodiment, the binder mesh material may be activated or fully activated after the fiber preforms have been formed by arranging pieces of fiber tape in layers. As the binder mesh is arranged along the outer surface of the fiber layer, and as such at the outer surface of the fiber tape, the fiber tape pieces may be connected to each other by this activation or full activation.

A partial activation of the binder mesh material may be achieved, for example, by heating the binder mesh material to a temperature which is below its melting temperature or softenting temperature range, but high enough that the surface of the binder mesh becomes adherent, e.g. to a temperature which is about 5 to 10°C below the melting temperature or softenting temperature range of the binder mesh material. In this case, the binder mesh only adheres to the fiber layer, but is not fully glued to it. In contrast, a full activation of the binder mesh material may be achieved by heating the binder mesh material to a temperature which is above its melting temperature or softenting temperature range.

It is, however, also conceivable to only mechanically connect the binder mesh to the fiber layer, e.g. by stitching the binder mesh to the fiber layer. In this case, the binder mesh material needs not to be activated at all. The sewing thread used for stitching may, for example, be made from a thermoplastic material.

In view of applications, in which a connection of the fiber tape pieces is not required, the binder mesh material may be fully activated in the fiber tape, e.g. by heating the binder mesh material to a temperature which is above its melting temperature or softening temperature range, such that it glues the fibers of the fiber layer together, thus providing optimum support for the fibers.

The heating of the binder mesh, be it the heating for partial or full activation, may be made using hot air, infrared radiation, electricity or any other suitable heating medium.

In particular in the case of full activation of the binder mesh material, the fiber tape may be pressed, in order to make the binder mesh material penetrate into the volume of the fiber layer.

According to a further embodiment, the binder mesh may have a weight amounting to between about 3 g/m² and about 30 g/m², preferably between about 6 g/m² and about 20 g/m².

The fiber layer may include all types of fibers which may be used for producing fiber reinforced parts. For example, the fiber layer may comprise carbon fibers and/or glass fibers and/or polyester fibers and/or aramid fibers and/or basalt fibers. In other words, the fiber layer may be made from fibers of only one type of material or from fiber blends.

Preferably, the fibers may be recycled fibers. When recuperating the fibers, all types of waste material produced during the production of fiber reinforced parts may be used. In particular, so-called "dry" waste material, i.e. fiber material which has not yet been brought into contact with matrix material, e.g. waste material generated during the production of fiber preforms, as well as so-called "wet" waste material, i.e. fiber material brought into contact with matrix material, e.g. waste material generated during the production of fiber reinforced parts from fiber pre-pregs, may be used. During the recuperation of the fibers from "wet" waste material, the matrix material, which may be either thermoset material or thermoplastic material, may be stripped off the fibers by using pyrolysis, solvolysis or any other suitable process. It is to be noted that it is acceptable and sometimes unavoidable that the stripped fibers still have a remainder of matrix material thereon (< 1 % by weight).

The recycled fibers may be supplied in every suitable form, e.g. as strands or slivers or staple fibers. In the case of slivers, it may be necessary to roll the sliver before supplying it to the binder mesh in order to obtain a flat fiber layer suitable for the manufacturing of the fiber tape according to the invention.

In order to ensure that fiber reinforced parts made from the fiber tape according to the invention have high-quality mechanical properties, such as tensile strength, E modulus, and the like, it is advantageous if the fibers are long fibers, i.e. if more than 50% of the fibers have a length of at least 60 mm, preferably a length of at least 100 mm, and/or if the fibers are realigned fibers. The mechanical properties of fiber tapes made according to the invention made using such discontinuous recycled fibers are comparable to fiber tapes according to the invention made from newly produced continuous fibers.

If the fibers are recycled fibers, the waste material supplied to the recuperation process may be pre-treated as to their fiber length. For example, too small pieces or pieces including too short fibers, may be removed from the supply, whereas too large pieces or pieces including too long fibers, which may be difficult to handle during the process of manufacturing the fiber tape according to the invention, may be cut to the desired length.

For realigning the fibers, for example the process and the device known from FR 3 005 065 A1 may be used.

As the realigned fibers may show a straight as well as a curved shape, it may be difficult to determine their degree of alignment based on their shape. As a consequence, it is suggested to manufacture a test plate of predetermined dimensions using sections of the fiber tape according to the invention having predermined length and all sections extending in the same nominal fiber direction (unidirectional test plate), to cut a first test sample having rectangular shape from the test plate, the longer rectangle side of the first test sample extending parallel to the nominal fiber direction, to cut a second test sample having the same rectangular shape as the first test sample from the test plate, the longer rectangle side of the second test sample extending perpendicular to the nominal fiber direction, and to determine the tensile strength (TS) of the first test sample (TS(0°)) and of the second test sample (TS(90°)). If the tensile strengths (TS) of the two test samples differ from each other by more than 10% ((TS(0°) - TS(90°))/TS(0°) > 10%), the fibers are deemed to be realigned.

The fiber tape according to the invention may in particular be formed using fiber layers including realigned long recycled carbon fibers (LrCF).

In view of most of the practical applications of the fiber tape according to the present invention, it is advantageous if the fiber layer has a weight amounting to between about 10 g/m and about 50 g/m, and/or if the fiber layer has a width of between about 10 mm and about 50 mm, preferably of about 25 mm.

According to a further aspect, the invention also relates to a process for manufacturing a fiber tape according to the invention, wherein the binder mesh and the fiber layer are connected to each other, after the binder mesh is brought into contact with the upper surface and/or the lower surface of the fiber layer.

With respect to further details of this process, it is referred to the above discussion of the fiber tape according to the invention.

By the manufacturing process according to the invention, the fiber tape may be produced as a so-called endless fiber tape which may be coiled up on a spool or coil for being transferred to a manufacturing site for manufacturing fiber reinforced parts, where it may be cut to length and combined with other fiber tape sections to form a preform (still lacking matrix material) or a prepreg (impregnated with matrix material).

In the following, the present invention will be explained in more detail referring to the accompanying drawings, in which
- Figure 1: shows a schematic perspective view of a fiber tape according to a first embodiment of the present invention;
- Figure 2: shows a schematic side view of a device for manufacturing the fiber tape of Figure 1;
- Figure 3: shows an enlarged perspective view of the wrapping unit of the device of Figure 2; and
- Figure 4: shows a test plate used in a check procedure for checking the quality of the fiber tape of Figure 1 produced using the manufacturing device of Figure 2;
- Figure 5: shows a schematic perspective view of a fiber tape according to a second embodiment of the present invention.

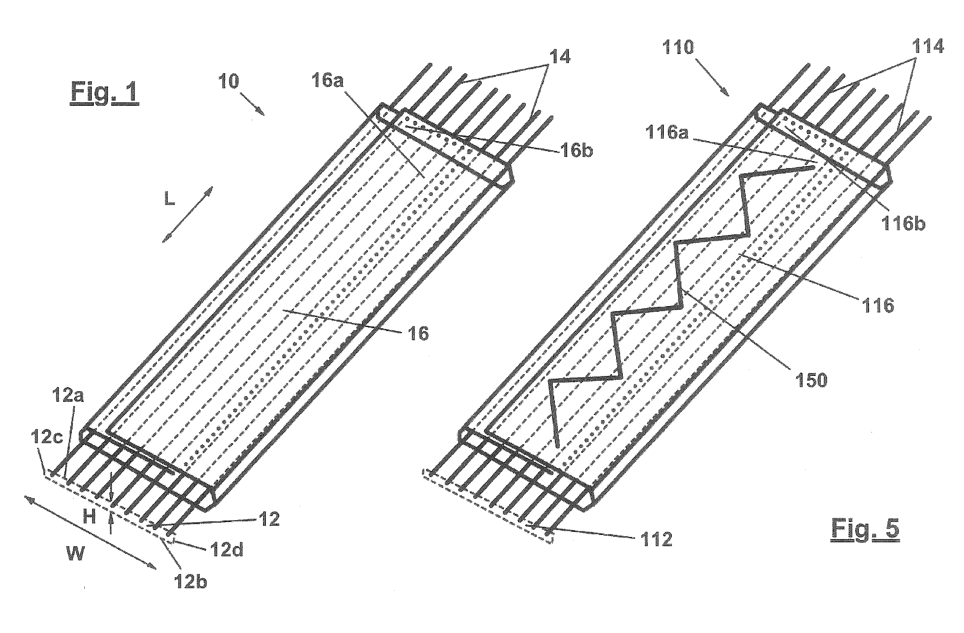

Figure 1 shows a fiber tape 10 according to a first embodiment of the present invention.

The fiber tape 10 comprises a fiber layer 12 formed of a plurality of fibers 14 extending substantially parallel to the longitudinal direction L of the fiber tape 10. The fiber layer 12 has a substantially flat shape, in other words, its width W is much larger than its height H. The fiber tape 10 further comprises a binder mesh 16, which is wrapped around the fiber layer 12 and secures the fibers 14 of the fiber layer 12 to each other. In particular, the binder mesh 16 covers an upper surface 12a and a lower surface 12b of the fiber layer 12, and also extends around the side surfaces 12c and 12d of the fiber layer 12.

According to a preferred, but not limiting embodiment, the fibers 14 may be long recycled carbon fibers (LrCF) realigned in order to extend substantially parallel to each other. The realignment may, for example, be achieved by the process and device known from FR 3 005 065 A1. It should be noted that, in the context of the present invention, the term "long fibers" refers to the fact that at least 50% of the fibers 14 have a length of at least 60 mm, preferably a length of at least 100 mm.

Furthermore, the binder mesh 16 may be made from a hot-melt or hot-softening glue material and may have a weight amounting to between about 3 g/m² and about 30 g/m², preferably between about 6 g/m² and about 20 g/m².

In order to form a closed envelope for the fiber layer 12, the two lateral edge portions 16a and 16b of the binder mesh 16 are overlapping each other. Furthermore, the glueing property of the hot-melt or hot-softening glue material of the binder mesh 16 may be at least partially activated in order to connect the two overlapping edge portions 16a and 16b of the binder mesh 16 to each other and to connect the entire binder mesh 16 to the fibers 14 of the fiber layer 12. A partial activation of the hot-melt glue material of the binder mesh 16 may, for example, be obtained by heating the hot-melt or hot-softening glue material to a temperature which is about 5 to 10°C below its melting temperature or softening temperature range.

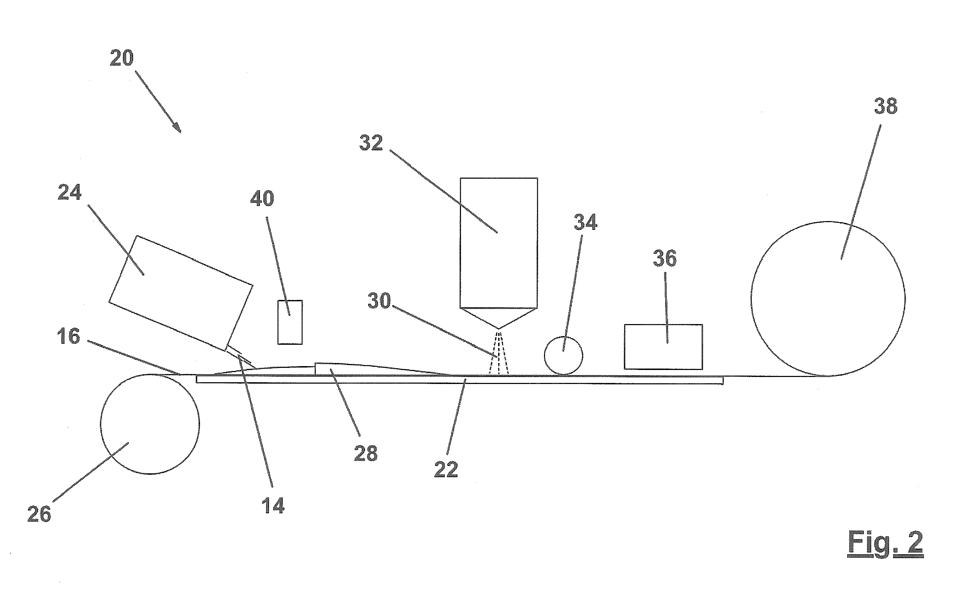

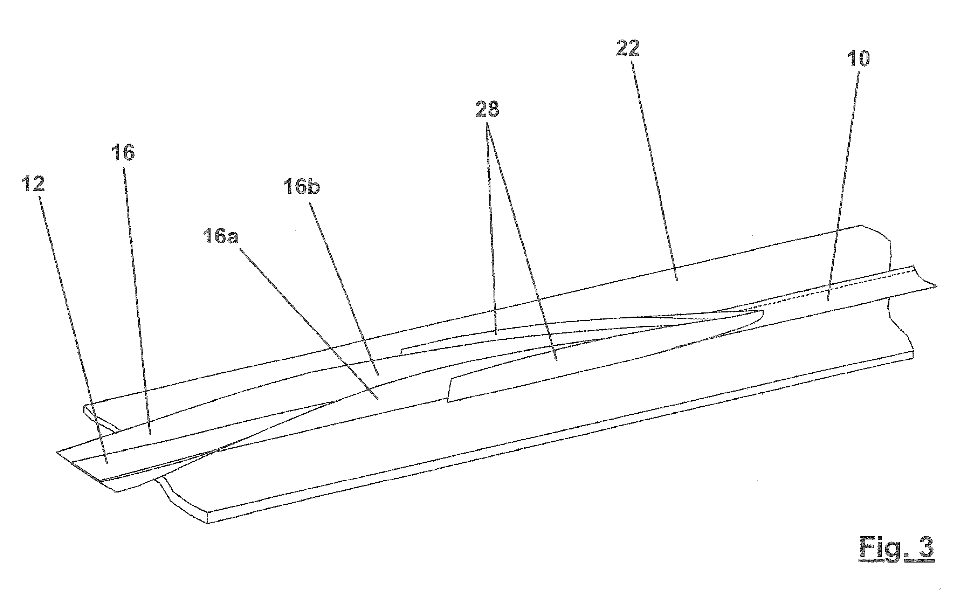

Figure 2 shows a device 20 for manufacturing the fiber tape 10. The realigned fibers 14 are supplied onto a manufacturing platform 22 by a fiber supply unit 24, e.g. the fiber supply unit known from FR 3 005 065 A1. To be precise, the fibers 14 are supplied onto the binder mesh 16, which is supplied from a binder mesh coil 26. By means of a wrapping unit 28, which is shown in more detail in Figure 3, the two lateral edge portions 16a and 16b of the binder mesh 16 are folded around the fiber layer 12 so that they overlap each other.

By means of a heat source 32, e.g. a hot air blowing unit 32 ejecting hot air 30 (see Figure 2), the binder mesh 16 is heated, e.g. to a temperature, which is about 5 to 10°C below the melting temperature or softening temperature range of the material of the binder mesh 16, in order to make the binder mesh material adherent (partial activation). It should be noted that instead of the hot air blowing unit 32 any other suitable type of heat source may be used, e.g. an infrared heater.

A pressure roller 34 presses the binder mesh 16 with its overlapping edge portions 16a and 16b against the fiber layer 12, in order to connect the overlapping edge portions 16a and 16b to each other and the overall binder mesh 16 to the fibers 14 of the fiber layer 12, or even to make the binder mesh material penetrate into the volume of the fiber layer 12. A cooling unit 36 cools the so-produced fiber tape 10 in order to maintain the achieved connected state of fiber layer 12 and binder mesh 16. Finally, the fiber tape 10 is coiled to a spool or coil 38 pulling the binder mesh 16 through the manufacturing device 20.

The degree of alignment of the fibers 14 supplied by the fiber supply unit 24 may be checked during the manufacturing process by a quality check unit 40, which, for example, may work optically on a pattern recognition basis.

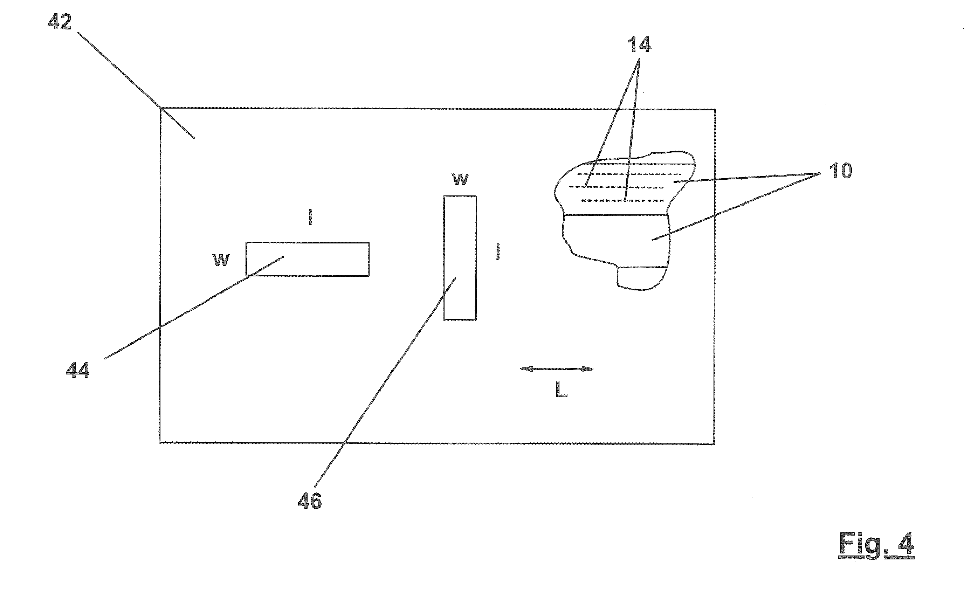

In addition or alternatively, the quality of the fiber tape 10 produced by the manufacturing device 20 may be checked using a test plate 42 (see Figure 4). The test plate 42 is manufactured by placing pieces of fiber tape 10 in several layers above each other such that the fibers 14 of all pieces of fiber tape 10 are extending parallel to each other, impregnating the so-obtained unidirectional preform with matrix material, e.g. thermoplastic or thermoset plastics material, and curing the matrix material. Then, two test samples 44 and 46 are cut from this test plate 42, both test samples 44, 46 having identical width w and identical length I, but, while the length direction of test sample 44 extends parallel to the fiber direction L (0°), length direction of test sample 46 extends orthogonal thereto (90°). These two test samples 44, 46 are placed in a tensile strength testing equipment, in order to determine the tensile strength (TS) of the parallel test sample 44 (TS(0°)) and of the orthogonal test sample (TS(90°)). And, if the tensile strengths (TS) of the two test samples 44, 46 differ from each other by more than 10% ((TS(0°) - TS(90°))/TS(0°) > 10%), the fibers are deemed to be aligned.

Figure 5 shows an alternative embodiment of a fiber tape according to the present invention substantially corresponding to the fiber tape 10 of Figure 1. As a consequence, in Figure 5, identical elements are designated by the same reference numerals as in Figure 1, but increased by 100. Moreover, fiber tape 110 shown in Figure 5 is described only insofar it differs from fiber tape 10 of Figure 1 to the description of which it is hereby explicitly referred.

Fiber tape 110 of Figure 5 differs from fiber tape 10 of Figure 1 by the fact that the overlapping edge portions 116a and 116b of the binder mesh 116, which are wrapped around the fibers 114 of the fiber layer 112, are connected to each other and to the fiber layer 112 by stitches 150, e.g. made from a thermoplastic thread. According to this embodiment, the hot-melt glue material of the binder mesh 116 needs not to be activated at all, as the stiches 150 are connecting not only the edge portions 116a and 116b to each other, but also the binder mesh 116 to the fibers 114 of the fiber layer 112 without the binder mesh material having to be adherent (partial activation) or tacky (full activation).

## Claims

1. A fiber tape (10) for producing fiber reinforced parts, the fiber tape (10) comprising a fiber layer (12) and a binder material securing the fibers (14) of the fiber layer (12) to each other,
**characterized in that** the binder material is provided as a binder mesh (16) covering at least an upper surface (12a) and/or a lower surface (12b) of the fiber layer (12).

2. The fiber tape of claim 2,
**characterized in that** the binder mesh (16) is provided as a binder mesh strip (16) laterally folded around the side edges (12c, 12d) of the fiber layer (12).

3. The fiber tape of claim 1 or 2,
**characterized in that** the two side edges (16a, 16b) of the binder mesh strip (16) are overlapping each other.

4. The fiber tape of any of claims 1 to 3,
**characterized in that** the binder mesh (16) is made of a hot-melt glue material.

5. The fiber tape of any of claims 1 to 4,
**characterized in that** the binder mesh material is not or at least not fully activated.

6. The fiber tape of any of claims 1 to 5,
**characterized in that** the binder mesh (16) has a weight amounting to between about 3 g/m² and about 30 g/m², preferably between about 6 g/m² and about 20 g/m².

7. The fiber tape of any of claims 1 to 6,
**characterized in that** the fiber layer (12) comprises carbon fibers (14) and/or glass fibers and/or polyester fibers and/or aramid fibers and/or basalt fibers.

8. The fiber tape of any of claims 1 to 7,
**characterized in that** the fibers (14) are recycled fibers.

9. The fiber tape of any of claims 1 to 8,
**characterized in that** more than 50% of the fibers (14) have a length of at least 60 mm, preferably a length of at least 100 mm.

10. The fiber tape of any of claims 1 to 9,
**characterized in that** the fibers (14) are realigned fibers.

11. The fiber tape of any of claims 1 to 10,
**characterized in that** the fiber layer (12) has a weight amounting to between about 10 g/m and about 50 g/m.

12. The fiber tape of any of claims 1 to 11,
**characterized in that** the fiber layer (12) has a width of between about 10 mm and about 50 mm, preferably of about 25 mm.

13. A process for manufacturing a fiber tape (10) according to any of the preceding claims, wherein the binder mesh (16) and the fiber layer (12) are connected to each other, after the binder mesh (16) is brought into contact with the upper surface (12a) and/or the lower surface (12b) of the fiber layer (12).
